# EUROPEAN PATENT SPECIFICATION

(11) **EP 3 158 201 B1**
(45) Date of publication and mention of the grant of the patent: **01.05.2019**
(21) Application number: 15732442.7
(22) Date of filing: 15.06.2015
(51) Int. Cl.: F04D 15/00, F04B 49/02, F04D 15/02, F04B 49/20, F04D 1/00, F04D 13/08

(54) **METHOD FOR SHUTTING OFF A PUMP AS WELL AS PUMP STATION ARRANGEMENT**
VERFAHREN ZUR ABSCHALTUNG EINER PUMPE SOWIE PUMPENSTATIONSANORDNUNG
MÉTHODE D'ARRÊT DE POMPE ET INSTALLATION DE STATION DE POMPAGE

(30) Priority: 17.06.2014 SE 1450756
(43) Date of publication of application: 26.04.2017
(73) Proprietor: Xylem Europe GmbH, 8200 Schaffhausen (CH)
(72) Inventor: LARSSON, Martin, 174 41 Sundbyberg (SE); MÖKANDER, Jürgen, 192 78 Sollentuna (SE); ZETTERQUIST, Martin, 171 65 Solna (SE)
(74) Representative: Brann AB
(86) International application number: PCT/IB2015/054500
(87) International publication number: WO 2015/193784

(56) References cited:
- EP-A1- 2 610 501
- JP-A- S5 572 677
- JP-A- S5 669 486
- JP-A- S61 210 280
- JP-A- 2000 356 190

## Description

### Technical field of the Invention

The present invention relates in general to a method for turning off a pump that is configured to pump liquid via a conduit, the pump before being turned off being driven at an operational frequency by means of a control unit. Especially the present invention relates to a turning off method for a pump configured to pump waste water. According to a second aspect the present invention relates to a pump station arrangement comprising a pump, a control unit and a conduit connected to the outlet of the pump, which pump station arrangement is configured to perform the above mentioned turning off method.

### Background of the Invention and Prior Art

In such pump station arrangements the flow rate of the liquid is in general in the range of 0,7-1 meter per second, entailing the presence of a large liquid flow having a large momentum in the conduit extending from the pump. The flow rate of the liquid is usually higher than 0,7 meter per second in order to avoid sedimentation in the conduit and does not usually exceed 1 meter per second in order not to experience to high friction losses. Thereto the conduit may be thousands of meters long. If the supply of liquid from the pump to the conduit is abruptly stopped a pressure wave in the liquid will be generated that is transported through the pipe system and thereby different parts of the liquid will have different speed. This cumbersome situation may entail the generation of vacuum bubbles in the conduit and when these implode, e.g. different parts of the liquid moving in different directions in the conduit, so-called water hammer will occur that risk damaging the conduit and its units. Thereto, when the liquid column turn back towards the pump the conventional non-return valve that is located downstream the pump will slam shut and risk to become damaged.

In order to reduce the water hammer effects it is traditionally known, for instance from JP 2000356190 A or JPS 5572677 A, to ramp down the frequency of the pump from the operational frequency to zero due to an automatically of manually generated turn off instruction. The purpose of ramping down is to have the pump to generate positive pump pressure all the time and thereby keeping the non-return valve open such that the flow rate of the liquid is lowered slowly such that no vacuum bubbles are generated in the conduit. In order to entirely eliminate vacuum bubbles the ramping down has to be very long, consuming unnecessary amounts of energy.

Thereto ramping down from the operational frequency to zero entail in reality that the non-return valve will become closed despite the impeller is still driven to generate a liquid flow but the pumping pressure and/or the liquid flow is too small to manage to pump liquid into the conduit. E.g. the pump consumes energy without performing any useful output.

A method for turning off a pump according to the preamble of appended claim 1 is known from JPS 5669486 A.

### Objects of the Invention

The present invention aims at minimizing the above mentioned drawbacks and shortages of previously known turning off methods and at providing an improved turning off method for a pump. A basic object of the invention is to provide an improved turning off method of the initially defined type, which in an as short time as possible turn the pump off at the same time as the water hammer effects in the conduit is substantially reduced.

Yet another object of the present invention is to provide a turning off method, in which the sizes of the vacuum bubbles are decreased.

It is another object of the present invention to provide a turning off method, that spares the conduit and non-return valves.

It is another object of the present invention to provide a turning off method, that entail decreased energy consumption during the turning off.

### Brief description of the Invention

According to the invention at least the basic object is attained by means of the initially defined method and pump station arrangement, having the features defined in the independent claims. Preferred embodiments of the present invention are further defined in the dependent claims.

According to a first aspect of the present invention it is provided a turning off method according to appended claim 1.

According to a second aspect of the present invention it is provided a pump station arrangement according to appended claim 8.

The pump station arrangement is characterized in that the control unit due to a turn off instruction is configured to ramp down the frequency of the pump from an operational frequency, the terminal frequency of the ramping down being equal to the operational frequency F_{N} of the pump minus at least 10Hz and the ramping down time being at least a reflection time T_{R} for the conduit in question, and the terminal frequency of the ramping down not being less than 10Hz, furthermore the control unit is configured to stop the pump after the ramping down, which includes the disengagement of the pump by means of the control unit in order to let the impeller of the pump to freewheel until it stops.

Thus the present invention is based on the understanding to use the positive effects at the beginning of a ramping down and avoiding the negative effects at the end of a ramping down, and it is ensured that the pump does not preform work that is not useful output.

According to a non-claimed example, the step of stopping the pump after the ramping down includes performing a second ramping down of the frequency of the pump by means of the control unit in such a way that the torque the motor of the pump is subject to from the pumped liquid is controlled towards being equal to zero. In this way an impeller freewheeling until it stops is imitated, and thereby it is ensured that the pump does not perform work that is not useful output.

According to a preferred embodiment the terminal frequency of the ramping down is less than or equal to 35Hz, and thereto bigger than or equal to 25Hz. In this way enough ramping down is performed in order to substantially reduce the water hammer effects without having the pump performing work that is not useful output.

Other advantages with and features of the invention are evident from the other dependent claims as well as from the following detailed description of preferred embodiments.

### Brief description of the drawings

A more complete understanding of the above mentioned and other features and advantages of the present invention will be evident from the following detailed description of preferred embodiments having reference to the attached drawings, in which:
- Fig. 1: is a schematic illustration of a pump station comprising the pump station arrangement,
- Fig. 2: is a diagram that schematically disclose how the frequency, the liquid flow and the pressure of the pump are changed during turning off in accordance with the present invention, and
- Fig. 3: is a diagram that schematically disclose how the frequency, the liquid flow and the pressure of the pump are changed during turning off in accordance with prior art.

### Detailed description of preferred embodiments

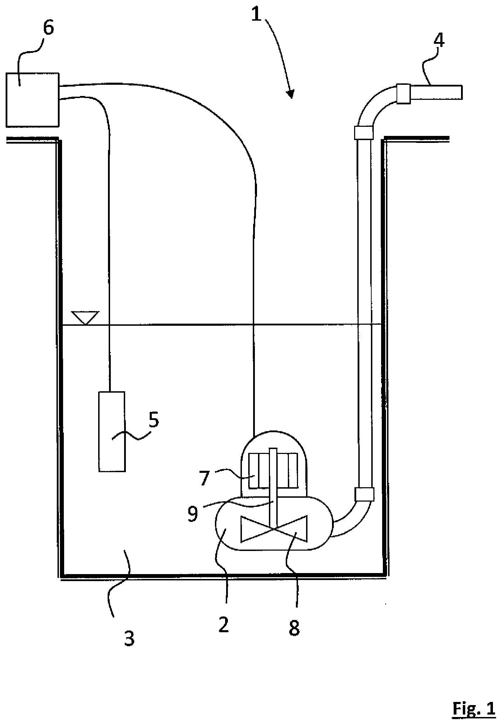

In figure 1 is disclosed a pump station arrangement comprising a pump station, generally designated 1, comprising at least one speed controlled pump 2, usually two submersible pumps, configured in an active state to pump liquid from a sump 3 of the pump station 1 to a conduit 4 extending away from the pump station 1. The conduit 4 comprises a non-return valve (not disclosed) arranged in close connection with the pump 2. Thereto the pump station 1 in a conventional way comprises at least one level sensor 5 arranged to determine the liquid level in the pump station 1, the level sensor 5 may for instance be constituted by a floating level sensor that is configured to determine a predetermined liquid level or a continuous level sensor that is configured to determine different liquid levels. It shall be pointed out that the level sensor 5 may be a separate device that is operatively connected to an external control unit 6, be operatively connected to said at least one speed controlled pump 2, be built-in in said at least one speed controlled pump 2, etc. Said at lest one speed controlled pump 2 is preferably operatively connected to the external control unit 6 in order to admit adjustment of the rotational speed of the pump, alternatively said at least one speed controlled pump 2 may comprise an built-in control unit (not shown). Herein below the term control unit 6 will be used independently of its physical location.

The pump 2 and the control unit 6 together constitute at least a part of a pump arrangement, in which the pump 2 comprises an electrical motor 7 that is arranged to be driven by said control unit 6, and an impeller 8 that is connected to the motor 7 via a drive shaft 9 in a conventional way. Preferably the impeller 8 is an open impeller, and most preferably the impeller is axially displaceable in the pump 2, in relation to a suction cover/insert ring at the inlet of the pump, during operation.

The term "speed controlled" embrace all conceivable ways to change the rotational speed of the pump, or more precisely the rotational speed/operational speed of the motor 7, especially adjustment of the current feed frequency by means of a frequency converter (Variable Frequency Drive) is intended, that is built-in in a pump or that is external, and that constitutes an example of said control unit 6, the rotational speed being proportional to the current feed frequency during normal operation. However, internally or externally controlled adjustment of the supply power, etc. are intended. Thus, at an overall level of the invention it is not essential how the operational speed of the pump is regulated, only that the rotational speed of the pump 2 can be adjusted/controlled.

The pump 2 is configured to be operatively connected to the power mains that in different parts of the world have different power frequency, usually 50Hz or 60Hz. According to an alternative embodiment the pump 2 is operatively connected to a power generating unit that makes use of a diesel engine, or the like. The output frequency from the power generation unit may be constant or variable, and is usually 50Hz or 60Hz.

During normal operation of the pump 2 it is driven by means of the control unit 6 at an operational frequency F_{N}, also known as operational speed. The operational frequency F_{N} can be varied over time or be constant, and can for instance be equal to a maximum frequency, i.e. the power frequency of the power mains, or be in the range of 90-95% of the power frequency of the power mains.

When the pump 2, or the pump station arrangement, owing to certain circumstances receive an automatically or manually generated turning off instruction, for instance from the level sensor 5, the control unit 6 initiates a controlled ramping down of the frequency F of the pump 2 from the operational frequency F_{N} downwards. This ramping down may be linear (constant decreasing rate) or un-linear (varying decrease rate) from the operational frequency F_{N} towards a terminal frequency for the ramping down.

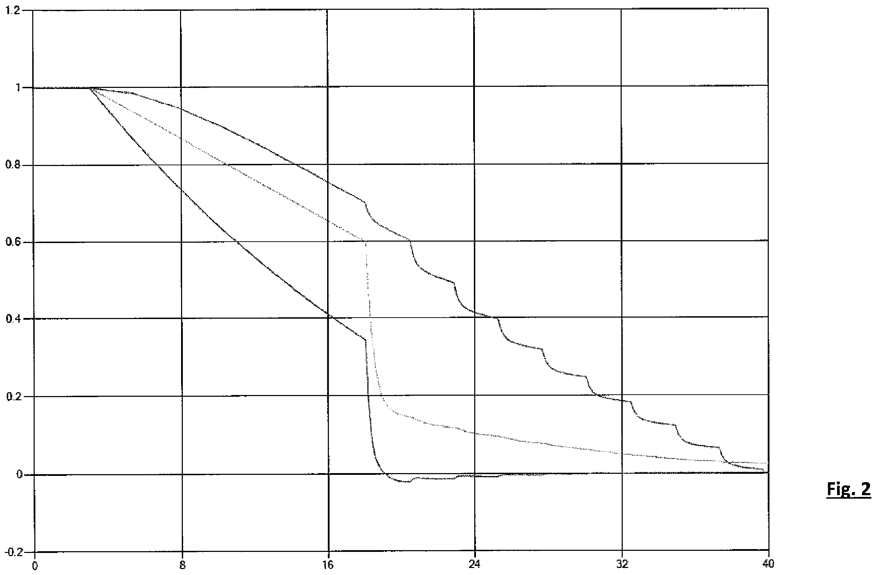

Reference is now made to figure 2 that schematically disclose a diagram having time measured in seconds at the X-axis and the frequency F of the pump 2 at the Y-axis. It shall be pointed out that the Y-axis has a comparative scale where the operational frequency F_{N} of the pump 2 is fixed at 1 (corresponding to 100 percent, which in reality is for instance 50Hz). The frequency F of the pump 2 is disclosed by means of the middle curve. Thereto the Y-axis also comprises the liquid flow in the conduit 4, the upper curve disclosing how the liquid flow is changed over time, and the pressure in the conduit 4 in the area downstream the pump 2, the lower curve disclosing how the pressure is changed over time. The liquid flow and the pressure are in accordance with the frequency F of the pump 2 given by means of comparative scales.

The terminal frequency of the ramping down shall be equal to the operational frequency F_{N} of the pump 2 minus at least 10Hz and thereto shall not fall below 10Hz. In the embodiment disclosed in figure 2 the terminal frequency of the ramping down is equal to 60% of the operational frequency F_{N}, i.e. 30Hz if the operational frequency F_{N} is equal to 50Hz. Preferably the terminal frequency of the ramping down shall be less than or equal to 40Hz, or most preferably less than or equal to 35Hz. Thereto, it is preferable that the terminal frequency of the ramping down is greater than or equal to 20Hz, most preferably greater than or equal to 25Hz.

The ramping down time shall be at least one reflection time T_{R} for the conduit 4 in question. In the example disclosed in figure 2 the ramping down time is approximately 15 seconds.

The reflection time T_{R} of the conduit 4 in question is known in such pump station arrangements and refer to the time it takes for a pressure wave in the conduit 4 to move back and forth in the conduit 4. The reflection time T_{R} is equal to 2*L/C, where L is the length of the conduit and C is a material specific constant. C is in the range 300-400 if the conduit 4 is made of plastic and C is in the range 1000-1200 if the conduit 4 is made of steel. Thus, for a conduit 4 made of plastic and having a length of 2000 meter the reflection time T_{R} is in the range 10-13 seconds, and the corresponding value for a conduit 4 made of steel is in the range 3,5-4 seconds.

According to a preferred embodiment the ramping down time shall be at least 10 seconds, most preferably at least 15 seconds. This is applicable at least when the reflection time of the conduit 4 is not known for whatever reason.

After the ramping down the inventive turning off method comprises the step of by means of the control unit 6 stopping the pump 2.

According to the invention, an embodiment of which is disclosed in figure 2, the step of stopping the pump 2 after the ramping down includes disengagement of the pump 2 by means of the control unit 6 in order to let the impeller 8 of the pump 2 to freewheel until it stops. According to a non-claimed example (not shown) the step of stopping the pump 2 after the ramping down includes performing a second ramping down of the frequency F of the pump 2 by means of the control unit 6 in such a way that the torque the motor 7 of the pump 2 is subject to from the pumped liquid is controlled towards being equal to zero. The second ramping down is terminated when the frequency F of the pump 2 is equal to zero. In other words the non-claimed example implies that a freewheeling of the impeller 8 is imitated. According to a second non-claimed example (not disclosed) a second ramping down may be performed that is steeper than the first ramping down.

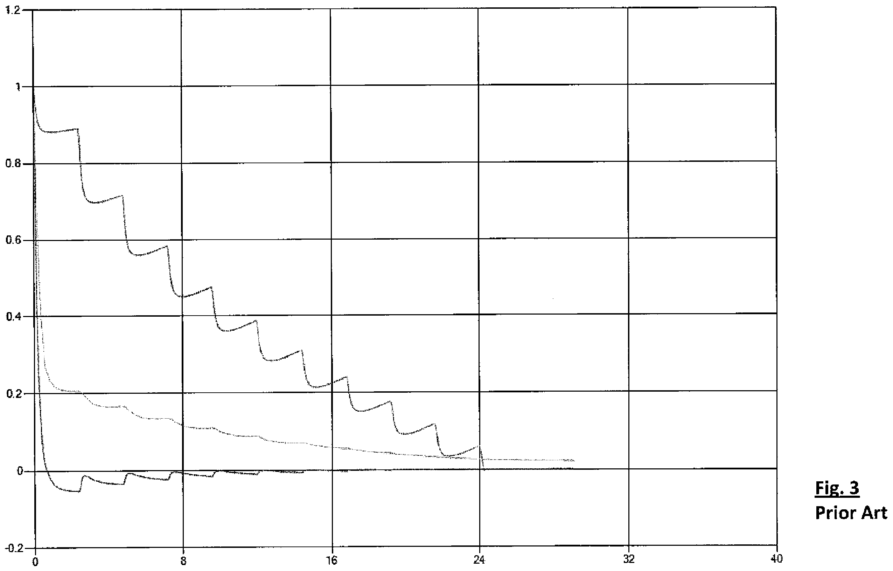

In figure 3 is disclosed a diagram of a turning off procedure according to prior art corresponding to figure 2, wherein the turning off of the pump 2 is performed by disengaging the impeller 8 of the pump 2 at the operational frequency and allowing the impeller 8 to freewheel until it stop. The lower curve disclose that a great under pressure arise in the conduit 4 causing extensive water hammering. The upper curve discloses an extensive pulsation of the liquid flow in the conduit 4.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and thus, the equipment may be modified in all kinds of ways within the scope of the appended claims.

It shall also be pointed out that all information about/concerning terms such as above, under, upper, lower, etc., shall be interpreted/read having the equipment oriented according to the figures, having the drawings oriented such that the references can be properly read. Thus, such terms only indicates mutual relations in the shown embodiments, which relations may be changed if the inventive equipment is provided with another structure/design.

## Claims

1. A method for turning off a pump (2) configured for pumping liquid via a conduit (4), the pump (2) before being turned off being driven at an operational frequency (F_{N}) by means of a control unit (6), the method comprising the steps of:
- by means of the control unit (6) ramping down the frequency of the pump (2) due to a turn off instruction, and
- by means of the control unit (6) stopping the pump (2) after said ramping down,
the method being **characterized in that** a terminal frequency of the ramping down is equal to the operational frequency (F_{N}) of the pump (2) minus at least 10Hz and the ramping down time is at least a reflection time (T_{R}) for the conduit in question, and the terminal frequency of the ramping down is not less than 10Hz, and **in that** the stopping the pump (2) after said ramping down includes the disengagement of the pump (2) by means of the control unit (6) in order to let the impeller (8) of the pump (2) to freewheel until it stops.

2. The method according to claim 1, wherein the terminal frequency of the ramping down is less than or equal to 40Hz.

3. The method according to claim 2, wherein the terminal frequency of the ramping down is less than or equal to 35Hz.

4. The method according to any of claims 1-3, wherein the terminal frequency of the ramping down is bigger than or equal to 20Hz.

5. The method according to claim 4, wherein the terminal frequency of the ramping down is bigger than or equal to 25Hz.

6. The method according to any preceding claim, wherein the ramping down time is at least 10 seconds.

7. The method according to claim 6, wherein the ramping down time is at least 15 seconds.

8. A pump station arrangement comprising a pump (2), a control unit (6) and a conduit (4) connected to the outlet of the pump (2), wherein the control unit (6) due to a turn off instruction is configured to ramp down the frequency of the pump (2) from an operational frequency (F_{N}), the terminal frequency of the ramping down being equal to the operational frequency (F_{N}) of the pump (2) minus at least 10Hz and the ramping down time being at least a reflection time (T_{R}) for the conduit in question, and the terminal frequency of the ramping down not being less than 10Hz, furthermore the control unit (6) being configured to stop the pump (2) after the ramping down by disengagement of the pump (2) in order to let the impeller (8) of the pump (2) freewheel until it stops.

## Patentansprüche

1. Verfahren zum Abschalten einer Pumpe (2), die zum Pumpen von Flüssigkeit über eine Rohrleitung (4) ausgebildet ist, wobei die Pumpe (2) vor dem Abschalten mit einer Betriebsfrequenz (F_{N}) mittels einer Steuereinheit (6) betrieben wird und das Verfahren die Schritte aufweist:
- mittels der Steuereinheit (6) erfolgendes Herunterfahren der Frequenz der Pumpe (2) aufgrund einer Abschaltanweisung, und
- mittels der Steuereinheit (6) erfolgendes Anhalten der Pumpe (2) nach dem Herunterfahren,
wobei das Verfahren **dadurch gekennzeichnet ist, dass** eine Endfrequenz des Herunterfahrens gleich der Betriebsfrequenz (F_{N}) der Pumpe (2) minus mindestens 10 Hz ist und die Herunterfahrzeit mindestens eine Reflexionszeit (T_{R}) für die betreffende Rohrleitung beträgt und die Endfrequenz des Herunterfahrens nicht weniger als 10 Hz beträgt, sowie dadurch, dass das Anhalten der Pumpe (2) nach dem Herunterfahren das Abkoppeln der Pumpe (2) mittels der Steuereinheit (6) umfasst, damit sich das Laufrad (8) der Pumpe (2) im Freilauf drehen kann, bis es anhält.

2. Verfahren nach Anspruch 1, wobei die Endfrequenz des Herunterfahrens kleiner als oder gleich 40 Hz ist.

3. Verfahren nach Anspruch 2, wobei die Endfrequenz des Herunterfahrens kleiner als oder gleich 35 Hz ist.

4. Verfahren nach einem der Ansprüche 1-3, wobei die Endfrequenz des Herunterfahrens größer als oder gleich 20 Hz ist.

5. Verfahren nach Anspruch 4, wobei die Endfrequenz des Herunterfahrens größer als oder gleich 25 Hz ist.

6. Verfahren nach einem der vorstehenden Ansprüche, wobei die Herunterfahrzeit mindestens 10 Sekunden beträgt.

7. Verfahren nach Anspruch 6, wobei die Herunterfahrzeit mindestens 15 Sekunden beträgt.

8. Pumpstationsanordnung, aufweisend: eine Pumpe (2), eine Steuereinheit (6) und eine Rohrleitung (4), die mit dem Auslass der Pumpe (2) verbunden ist, wobei die Steuereinheit (6) aufgrund einer Anweisung ausgebildet ist, die Frequenz der Pumpe (2) von einer Betriebsfrequenz (F_{N}) herunterzufahren, die Endfrequenz des Herunterfahrens gleich der Betriebsfrequenz (F_{N}) der Pumpe (2) minus mindestens 10 Hz ist und die Herunterfahrzeit mindestens eine Reflexionszeit (T_{R}) für die betreffende Rohrleitung beträgt und die Endfrequenz des Herunterfahrens nicht weniger als 10 Hz beträgt, ferner die Steuereinheit (6) ausgebildet ist, die Pumpe (2) nach dem Herunterfahren durch Abkoppeln der Pumpe (2) anzuhalten, damit sich das Laufrad (8) der Pumpe (2) im Freilauf drehen kann, bis es anhält.

## Revendications

1. Procédé d'extinction d'une pompe (2) configurée pour pomper un liquide via une conduite (4), la pompe (2) avant d'être éteinte étant entraînée à une fréquence opérationnelle (F_{N}) au moyen d'une unité de commande (6), le procédé comprenant les étapes de :
- au moyen de l'unité de commande (6) décélération de la fréquence de la pompe (2) du fait d'une instruction d'extinction, et
- au moyen de l'unité de commande (6) arrêt de la pompe (2) après ladite décélération,
le procédé étant **caractérisé en ce qu'**une fréquence de borne de la décélération est égale à la fréquence opérationnelle (F_{N}) de la pompe (2) moins au moins 10 Hz et le temps de décélération est au moins un temps de réflexion (T_{R}) pour la conduite en question, et la fréquence de borne de la décélération n'est pas inférieure à 10 Hz, et **en ce que** l'arrêt de la pompe (2) après ladite décélération inclut le désengagement de la pompe (2) au moyen de l'unité de commande (6) afin de laisser le rotor (8) de la pompe (2) tourner en roue libre jusqu'à ce qu'il s'arrête.

2. Procédé selon la revendication 1, dans lequel la fréquence de borne de la décélération est inférieure ou égale à 40 Hz.

3. Procédé selon la revendication 2, dans lequel la fréquence de borne de la décélération est inférieure ou égale à 35 Hz.

4. Procédé selon l'une quelconque des revendications 1 à 3, dans lequel la fréquence de borne de la décélération est supérieure ou égale à 20 Hz.

5. Procédé selon la revendication 4, dans lequel la fréquence de borne de la décélération est supérieure ou égale à 25 Hz.

6. Procédé selon l'une quelconque des revendications précédentes, dans lequel le temps de décélération est d'au moins 10 secondes.

7. Procédé selon la revendication 6, dans lequel le temps de décélération est d'au moins 15 secondes.

8. Agencement de station de pompage comprenant une pompe (2), une unité de commande (6) et une conduite (4) raccordée à l'évacuation de la pompe (2), dans lequel l'unité de commande (6) du fait d'une instruction d'extinction est configurée pour décélérer la fréquence de la pompe (2) depuis une fréquence opérationnelle (F_{N}), la fréquence de borne de la décélération étant égale à la fréquence opérationnelle (F_{N}) de la pompe (2) moins au moins 10 Hz et le temps de décélération étant au moins un temps de réflexion (T_{R}) pour la conduite en question, et la fréquence de borne de la décélération n'étant pas inférieure à 10 Hz, l'unité de commande (6) étant en outre configurée pour arrêter la pompe (2) après la décélération par désengagement de la pompe (2) afin de laisser le rotor (8) de la pompe (2) tourner en roue libre jusqu'à ce qu'il s'arrête.
